Europäisches Patentamt

European Patent Office

Office européen des brevets

(11) Publication number: 0 365 075
A1

# EUROPEAN PATENT APPLICATION

(21) Application number: 89202550.3

(22) Date of filing: 09.10.89

(51) Int. Cl.5: B29C 59/02 , B29C 51/22 , B65D 81/14

(30) Priority: 10.10.88 NL 8802484

(43) Date of publication of application:
25.04.90 Bulletin 90/17

(84) Designated Contracting States:
AT BE CH DE ES FR GB GR IT LI LU NL SE

(71) Applicant: TREDEGAR FILM PRODUCTS B.V.
10, Ir. van Dieststraat
NL-6461 AB Kerkrade(NL)

(72) Inventor: Dresen, Robert Arthur Gerard
Hertogstraat 16
NL-6584 AN Molenhoek(NL)

(74) Representative: van der Kloet-Dorleijn,
Geertruida W.F., Drs. et al
EXTERPATENT B.V. P.O. Box 90649
NL-2509 LP The Hague(NL)

(54) Plastic film provided with a relief pattern, process for the production thereof and a packaging material comprising such a film.

(57) The invention relates to a plastic film which is provided with a relief pattern, is in particular suitable as packaging material and may or may not be provided with a supporting layer, wherein the plastic film is crease-resistant and is provided with depressions (6, 7, 8) having such a height that they are able completely to regain their original form after deformation by the application of pressure. The height of the depressions (6, 7, 8) is from 800 μ to 1500 μ, preferably about 1200 μ and are formed by vacuum deep-drawing, and may or may not be perforated. Said plastic film is preferably a polyalkene film, having a thickness of at most 250 μ. A supporting layer (4) may be provided, and being joined to the plastic film (1) by means of an adhesive, in places or in the entire surface. A process for the production of a plastic film which is provided with a relief pattern and may or may not be provided with a supporting layer, a relief pattern being applied in the form of depressions to a plastic film and the film thus obtained being laminated, if desired, with a supporting layer, wherein the depressions (6, 7, 8) having a height of from 800 μ to 1500 μ, are applied in a crease-resistant plastic film (1), preferably a polyalkene film and more particularly a polyethene film is also described.

**Plastic film provided with a relief pattern, process for the production thereof and a packaging material comprising such a film.**

The invention relates to a plastic film which is provided with a relief pattern, is in particular suitable as packaging material and may or may not be provided with a supporting layer.

A plastic film of this type is generally known.

One drawback of this known film is that the relief pattern is not able completely to regain its original form after deformation by the application of pressure, as a result of which the appearance also becomes shiny at the site of the deformation, while the non-deformed part retains its non-shiny form.

When a film of this type is used as a packaging material for, in particular, luxury articles, the consequence of such a susceptibility to damage is that the material must be replaced.

A plastic film which is provided with a relief pattern and may or may not be provided with a supporting layer has now been found which does not have such draw backs.

The plastic film according to the invention is characterized in that the plastic film is crease-resistant and is provided with depressions having such a height that they are able completely to regain their original form after deformation by the application of pressure.

In certain applications, the film formed in this way therefore has a very low susceptibility to damage, as a result of the shock- and impact-absorbing capacity.

The height of the depressions is appropriately from 800 $\mu$ to 1500 $\mu$, preferably about 1200 $\mu$.

The depressions are appropriately formed by vacuum deep-drawing. The depressions formed can have an arbitrary surface structure, for example rectangular, circular or a honeycomb structure, or combinations thereof.

Preferably, the film is a polyalkene film, in particular a polyethene or polypropene film. However, any other material which is crease-resistant and in which the depressions present are able completely to regain their original form after deformation by the application of pressure can also be used.

The thickness of the film is at most 250 $\mu$, more particularly approximately 15 $\mu$ to 150 $\mu$.

If desired, the surface layer of the plastic film can be provided with a surface texture in order to obtain a specific extra aesthetic effect.

The depressions present in the plastic film according to the invention may or may not be perforated.

It is pointed out that the presence of perforations has no influence on the crease-resistant capacity of the film, while, in addition, the depressions provided with perforations are likewise able to regain their original form after deformation by the application of pressure.

The plastic film in question is appropriately provided with a supporting layer.

This supporting layer is preferably chosen from metal foils, plastic films and paper sheets, in particular cardboard. Appropriately, the cardboard is provided with a surface layer, as in the case of chromo-cardboard. Any other supporting layer suitable for a specific application can, however, also be used.

The supporting layer is preferably joined to the plastic film at least in places.

When a thermo-adhesive plastic is used, the supporting layer and the plastic film are preferably joined by means of heat.

Advantageously, however, the supporting layer is joined to the plastic film by means of an adhesive layer.

Although the adhesive layer can be applied on one side, for example on the supporting layer, the adhesion with the plastic film can be effected in places, in the form of strips or over the entire contact surface between plastic film and supporting layer. In practice, the application of the adhesive to the supporting layer is to be preferred, but the adhesive can also be applied to the plastic film.

Preferably, the adhesive used is an air-hardening adhesive. If desired, the composite joined in this way is subjected to an after treatment, for example consisting of heating, to improve the adhesion between the contact surfaces of the two layers and to deactivate the adhesive power of the adhesive at the locations where no adhesion is produced.

The invention also relates to a process for the production of a plastic film which is provided with a relief pattern and may or may not be provided with a supporting layer, a relief pattern being applied in the form of depressions to a plastic film and the film thus obtained being laminated, if desired, with a supporting layer, characterized in that the depressions having a height of from 800 $\mu$ to 1500 $\mu$, preferably 1200 $\mu$, are applied in a crease-resistant plastic film, preferably a polyalkene film and more particularly a polyethene film.

Preferably, a polyethene film is used which has a thickness of at most 250 $\mu$ and more particularly of approximately 15 $\mu$ to 150 $\mu$.

The invention also relates to a packaging material consisting of at least a plastic film, which may or may not be provided with a supporting layer, characterized in that the plastic film is a film according to the invention.

The invention is illustrated in more detail with the aid of several examples and the accompanying drawing, in which:

Figure 1 shows a section of a plastic film according to the invention provided with non-perforated ("deep embossed") depressions;

Fig. 2 shows the same section of a plastic film provided with perforated depressions;

Fig. 3 shows a plastic film according to Fig. 1 provided with an extra surface texture;

Fig. 4a shows a plastic film provided with a supporting layer, a possible variant for the adhesion being shown in Fig. 4b; and

Fig. 5 shows schematically an installation for the production of a plastic film according to the invention.

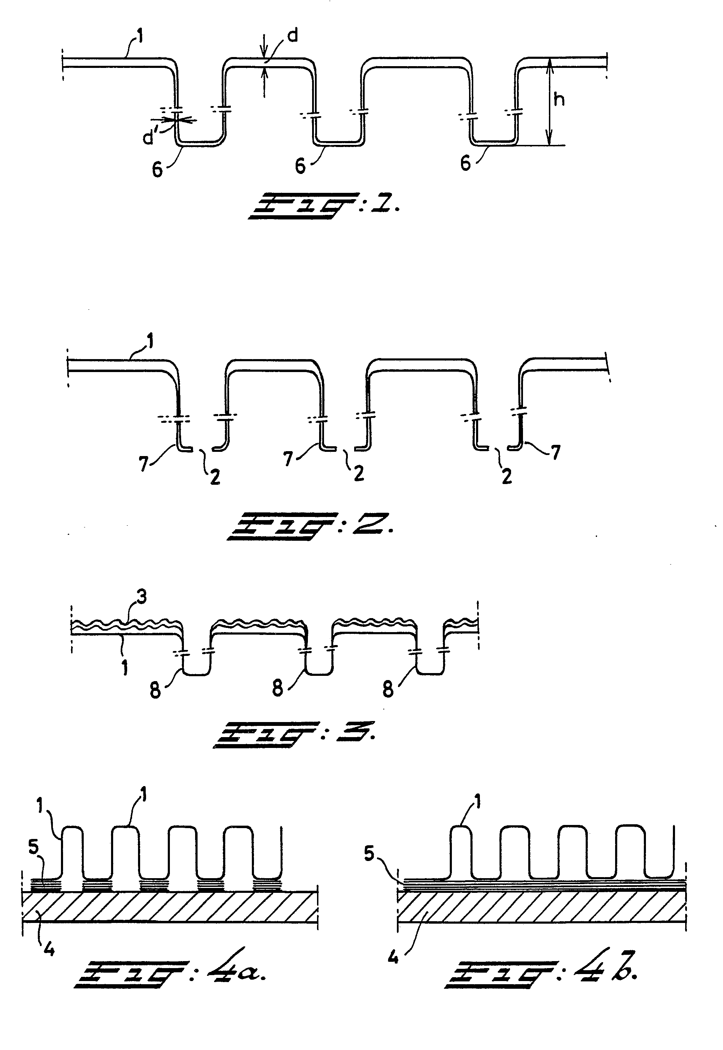

Fig. 1 shows a section of a plastic film 1, consisting of polyethene, provided with depressions 6. The thickness of the polyethene film, indicated by $d'$ is approximately 25 $\mu$ and the height h of the depressions 6 present is approximately 1200 $\mu$. The thickness d, of the walls of the depressions is, of course, smaller and in accordance with a stretching factor of approximately 0.3 to 1.0.

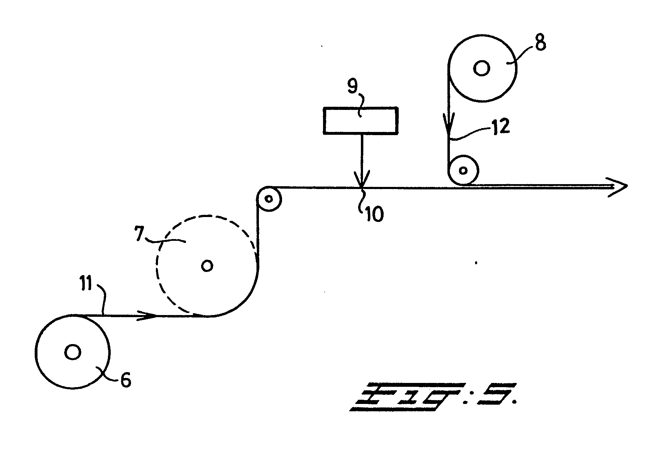

Fig. 2 shows the same plastic film as in Fig. 1, except that the depresssions 7 are provided with perforations 2. A film of this type provided with perforations also has the ability that the depressions are able to regain their original form after deformation by the application of pressure. It is pointed out that the perforations can be present in all depressions, but it is also possible for only some of the depressions to be provided with perforations.

Fig. 3 shows a variant of a plastic film according to the invention which consists in that the surface layer of the film 1 provided with depressions 8 is provided with a surface texture 3. Depending on the intended effect, a surface texture of this type can be present over the entire surface of the film or can be applied only in places.

Fig. 4a shows a plastic film 1 provided with a supporting layer 4. In this embodiment the supporting layer 4 is joined to the plastic film 1 by means of adhesive 5 applied in places. Of course, the adhesive can be applied to a portion of the surface, such as in the form of narrow strips, on the supporting layer 4 or, if desired also, or exclusively, on the plastic film 1. Preferably, the adhesive is an air-hardening adhesive. Any adhesive of this type which can be used for the adhesion of a plastic film is, of course, suitable. If desired, an adhesive is used which must be subjected to a thermal after-treatment to improve the adhesion between the two layers.

Fig. 4b shows a variant of the embodiment shown in Fig. 4a, which consists in that the adhesive layer 5 is applied as an uninterrupted layer.

Fig. 5 shows schematically an installation for the production of a plastic film according to the invention. The flat plastic film 11 is unwound from stock roller 6 and fed over a perforated roll 7 for the vacuum deep-drawing to form depressions in the plastic film. If desired, the film can then be provided in 10 with adhesive originating from holder 9. Finally, the film provided with depressions is provided with a supporting layer 12, which is unwound from roll 8.

## Example I

A polyethene film with a thickness of 25 $\mu$ is subjected to vacuum deep-drawing with the aid of a screen with an 8.75 mesh raster fitted on a roller. The depressions formed in this way have a honeycomb structure at the surface, the height of the depressions being approximately 1200 $\mu$. By virtue of its shock-absorbing capacity, the film obtained, which is provided with a relief pattern, is particularly suitable as packaging material, such as, for example, for small electrical equipment.

## Example II

A plastic film obtained as indicated in Example I is provided with a supporting layer consisting of cardboard by sticking the film to the cardboard by means of a layer of an air-hardening adhesive applied to the cardboard.

In this way a packaging material is obtained which is suitable for decorative purposes and the plastic film on the outside of which is provided with depressions which are able completely to regain their original form after deformation by the application of pressure.

It is pointed out that the adhesion of the plastic film and the supporting layer can take place by any suitable technique, such as by laminating, and the layer of the adhesive can likewise be applied by any other conventional technique.

## Claims

1. Plastic film which is provided with a relief pattern, is in particular suitable as packaging material and may or may not be provided with a supporting layer, characterized in that the plastic film (1) is crease-resistant and is provided with depressions (6, 7, 8) having such a height that they are able completely to regain their original form after deformation by the application of pressure.

2. Plastic film according to Claim 1, characterized in that the height of the depressions (6, 7, 8) is from 800 μ to 1500 μ, preferably about 1200 μ.

3. Plastic film according to Claim 1 or 2, characterized in that the depressions (6, 7, 8) are formed by vacuum deep-drawing, and may or may not be perforated.

4. Plastic film according to Claim 1-3, characterized in that the film is a polyalkene film, in particular a polyethene or polypropene film.

5. Plastic film according to Claims 1-4, characterized in that the film has a thickness of at most 250 μ, more particularly of approximately 15 μ to 150 μ.

6. Plastic film according to Claims 1-5, characterized in that the film is provided with a supporting layer (4), preferably chosen from metal foils, plastic films and papers sheets, in particular cardboard, more particularly cardboard provided with a surface layer, such as chromo-cardboard.

7. Plastic film according to Claims 1-6, characterized in that the supporting layer (4) is joined to the plastic film (1) at least in places, preferably by means of an adhesive layer (5), in particular a layer of an air-hardening adhesive.

8. Plastic film according to Claims 1-7, characterized in that when a thermo-adhesive plastic is used the supporting layer (4) and the plastic film (1) are joined by means of heat.

9. Process for the production of a plastic film which is provided with a relief pattern and may or may not be provided with a supporting layer, a relief pattern being applied in the form of depressions to a plastic film and the film thus obtained being laminated, if desired, with a supporting layer, characterized in that the depressions (6, 7, 8) having a height of from 800 μ to 1500 μ, preferably 1200 μ, are applied in a crease-resistant plastic film (1), preferably a polyalkene film and more particularly a polyethene film.

10. Process according to Claim 9, characterized in that a polyethene film is used which has a thickness of at most 250 μ and more particularly of approximately 15 μ to 150 μ.

11. Packaging material consisting of at least a plastic film, which may or may not be provided with a supporting layer, characterized in that the plastic film is a film according to Claims 1-8.

EP 0 365 075 A1

Fig: 1.

Fig: 2.

Fig: 3.

Fig: 4a.

Fig: 4b.

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 575 781 (PEZELY) --- | 1-11 | B 29 C 59/02 B 29 C 51/22 B 65 D 81/14 |
| X | US-A-3 769 145 (GRESHAM et al.) * Col. 1, l. 66 - Col. 2, l. 33; Figures * --- | 1-11 | |
| X | FR-A-2 261 860 (ETHYL CORP.) * Page 1, l. 10-11; Page 5, l. 8-11; Page 5, l. 21-27; Figures * --- | 1-11 | |
| X | EP-A-0 166 312 (KAWAKAMI SANGYO K.K.) * Page 8, l. 19 - Page 9, l. 14; Fig. 1 * --- | 1-11 | |
| X | FR-A-2 389 485 (PROPLAN) * Claim 1; Fig. 2 * --- | 1-11 | |
| X | FR-A-2 417 382 (UNILEVER) * Page 1, l. 3-6; Figs. 6a-9a * --- | 1-11 | |
| X | US-A-4 211 743 (NAUTA et al.) * Col. 1, l. 30-47; Col. 6, l. 3-9 * ----- | 1,2 | TECHNICAL FIELDS SEARCHED (Int. Cl.5) B 29 C B 65 D |

The present search report has been drawn up for all claims

| Place of search | Date of completion of the search | Examiner |
|---|---|---|
| THE HAGUE | 22-01-1990 | ATTALLA G. |